# FASCICULE DE BREVET EUROPEEN

(11) **EP 2 415 725 B1**
(45) Date de publication et mention de la délivrance du brevet: **26.03.2014**
(21) Numéro de dépôt: 10170916.0
(22) Date de dépôt: 27.07.2010
(51) Int. Cl.: C23C 10/30, C03C 4/00, C03C 14/00, B05D 1/10, C23C 4/00

(54) **Article en verre à propriétés antimicrobiennes**
Glasprodukt mit antimikrobiellen Wirkung
Glass article with antimicrobial properties

(43) Date de publication de la demande: 08.02.2012
(73) Titulaire: Beneq Oy, 01510 Vantaa (FI)
(72) Inventeur: Mariage, Fabian, 6040 Jumet (BE); Boulanger, Pierre, 6040 Jumet (BE)
(74) Mandataire: Papula Oy

(56) Documents cités:
- EP-A1- 0 806 401
- EP-A1- 1 985 592
- WO-A1-2006/064059
- US-A1- 2003 097 858

## Description

### 1. Domaine de l'invention

La présente invention concerne un procédé pour obtenir un article en verre dont au moins une des surfaces possède des propriétés antimicrobiennes qui résistent à un traitement en température, en particulier à un traitement en température en vue de leur trempe ultérieure.

### 2. Solutions de l'art antérieur

Il existe différents types de substrats verriers présentant une surface avec des propriétés antimicrobiennes et ils possèdent tous au moins un agent dit «antimicrobien ». Celui-ci est souvent situé à la surface dudit article. Des exemples d'agent antimicrobien connu sont l'argent (Ag), le cuivre (Cu) ou le zinc (Zn).

Un substrat verrier à propriété antimicrobienne connu, notamment de la demande WO2005/042437 A1, est obtenu par diffusion de l'agent antimicrobien, en particulier de l'argent (Ag), au départ de l'une des surfaces du substrat vers la masse du substrat, sur une profondeur de l'ordre de 2 microns.

Un autre type de substrat verrier à propriété antimicrobienne connu comporte, sur une de ses surfaces, un revêtement ou «coating» constitué d'un liant et de l'agent antimicrobien dispersé dans ledit liant. De tels exemples de substrats sont donnés dans les demandes WO03/056924 A1 et WO2006/064060 A1.

Malheureusement, quel que soit le type de substrat envisagé, les propriétés antimicrobiennes ne résistent que très peu à un traitement à des températures supérieures à 400°C. En effet, du fait de la rapide diffusion de l'élément Ag à ces températures, celui-ci migre progressivement de la surface ou d'une zone proche de la surface, où il est efficace pour neutraliser les microbes, vers la masse du substrat verrier où il n'est plus disponible pour jouer son rôle antimicrobien. De telles températures, qui sont typiquement celles requises pour réaliser la trempe du verre (∼650-700°C), entraînent dès lors une diminution drastique des propriétés antimicrobiennes du verre qui aura été traité thermiquement.

Or, de plus en plus d'applications verrières nécessitent des feuilles de verre trempé pour des raisons de sécurité, étant donné qu'un tel verre possède une résistance aux chocs accrues.

Une solution au problème survenant du fait d'un traitement thermique d'un substrat verrier à propriétés antimicrobiennes est déjà connue. Il s'agit d'utiliser une couche dite « barrière de diffusion» afin de diminuer ou ralentir la diffusion de l'argent dans la masse du verre et ainsi préserver au maximum l'activité antimicrobienne initiale. L'état de la technique décrit l'utilisation d'une telle couche qui est alors déposée directement sur la surface du verre, impérativement entre le verre et l'agent antimicrobien. Le substrat doit alors comprendre une seconde couche déposée sur la couche barrière et comportant l'agent antimicrobien, seul ou en combinaison d'un liant. Une telle solution au problème est notamment décrite dans la demande internationale WO2006/064060 A1.

Cette solution technique présente cependant certaines limitations. En effet, l'introduction d'une ou plusieurs couches sur un substrat verrier entraîne souvent une altération des propriétés optiques et/ou esthétiques du substrat telles que, par exemple, une diminution de la transmission lumineuse, un changement de coloration ou une augmentation de la réflexion lumineuse.

De plus, cette solution technique nécessite le dépôt consécutif d'au moins deux couches sur le substrat verrier ce qui entraîne nécessairement des étapes supplémentaires dans le procédé de fabrication, un coût plus élevé, etc.

Une autre solution technique au problème de diffusion de l'argent de la surface vers la masse serait d'utiliser une plus grande concentration en argent dès le départ afin que l'effet négatif de cette diffusion sur l'activité antimicrobienne reste insignifiant ou faible. Néanmoins, cette solution est de prime abord peu convaincante pour des raisons économiques évidentes mais également pour des raisons esthétiques, car une trop grande concentration en argent entraîne de façon connue une coloration jaune disgracieuse du verre.

### 3. Objectifs de l'invention

L'invention a notamment pour objectif de pallier à ces derniers inconvénients en résolvant le problème technique, à savoir la diminution ou le ralentissement de la diffusion de l'argent dans le verre du fait d'un traitement thermique d'un substrat verrier à propriétés antimicrobiennes.

Plus précisément, un objectif de l'invention, dans au moins un de ses modes de réalisation, est de fournir un substrat verrier à propriétés antimicrobiennes dont les propriétés antimicrobiennes restent stables à des températures supérieurs à 400°C. En particulier, un objectif de l'invention est de fournir un substrat verrier à propriétés antimicrobiennes dont les propriétés antimicrobiennes restent stables à un traitement en température en vue de leur trempe ultérieure.

Un autre objectif de l'invention est de fournir un substrat verrier à propriétés antimicrobiennes ne comportant pas de couche et/ou ne nécessitant pas d'étape de dépôt de couches.

Finalement, un dernier objectif de l'invention est de fournir une solution aux désavantages de l'art antérieur qui soit simple, rapide et économique.

### 4. Exposé de l'invention

L'invention concerne un procédé pour obtenir un article en verre, ledit procédé comprenant
(i) l'inclusion partielle et/ou totale de nanoparticules dans la masse d'un substrat verrier proche d'au moins une surface du substrat verrier, les nanoparticules étant constituées d'au moins un composé inorganique;
(ii) le dépôt d'au moins un agent antimicrobien sur ladite surface du substrat verrier;
   et
(iii) la diffusion de l'agent antimicrobien sous ladite surface du substrat verrier;
dans lequel l'inclusion partielle et/ou totale de nanoparticules est réalisée par la pulvérisation assistée par flamme afin d'apporter l'énergie nécessaire à la diffusion/l'incorporation des nanoparticules au moment du dépôt des nanoparticules.

Ainsi, l'invention repose sur une approche tout à fait nouvelle et inventive car elle permet de solutionner les inconvénients des produits verriers de l'art antérieur et de résoudre le problème technique posé. Les inventeurs ont en effet mis en évidence qu'il était possible d'obtenir un substrat verrier présentant des propriétés antimicrobiennes résistant à la température, sans recourir à des couches, en combinant un agent antimicrobien diffusé, de manière connue, sous la surface du verre avec des nanoparticules constituées d'au moins un composé inorganique et qui sont totalement et/ou partiellement incorporées dans la masse dudit verre proche de sa surface. De manière surprenante, les inventeurs ont donc mis en évidence que la présence de nanoparticules incluses dans la surface ou -sous la surface de l'article de verre permettait de bloquer ou ralentir la diffusion de l'argent sous l'effet de la température.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des figures annexées, parmi lesquels :
la figure 1 représente, à titre comparatif, un profil de concentration en argent dans la profondeur du verre d'articles en verre à propriétés antimicrobiennes selon l'état de la technique ;
la figure 2 représente, à titre comparatif, un profil de concentration en argent dans la profondeur du verre d'un article, en l'absence de nanoparticules ;
la figure 3 représente un profil de concentration en argent dans la profondeur du verre d'un article selon l'invention, obtenu par pulvérisation assistée par flamme ;
la figure 4 représente un cliché obtenu en microscopie électronique à transmission d'une section d'un article de verre selon l'invention ;
la figure 5 représente un profil de concentration en argent dans la profondeur du verre d'un article selon l'invention, obtenu par pulvérisation assistée par flamme ;
la figure 6 représente le rapport d'intensités I(CsAg)/I(CsSi) (échelle logarithmique) en fonction de la profondeur (d) dans la feuille de verre au départ de la surface traitée.

### 6. Description d'un mode de réalisation de l'invention

L'article en verre obtenu par le procédé selon l'invention est formé d'un verre de type inorganique pouvant appartenir à diverses catégories. Le verre inorganique peut ainsi être un verre de type sodo-calcique, un verre au bore, un verre au plomb, un verre comprenant un ou plusieurs additifs répartis de manière homogène dans sa masse, tels que, par exemple, au moins un colorant inorganique, un composé oxydant, un agent régulateur de la viscosité et/ou un agent facilitant la fusion. De préférence, l'article en verre selon l'invention est formé d'un verre de type sodo-calcique qui peut être clair ou coloré dans la masse. L'expression "verre sodo-calcique" est utilisée ici dans son sens large et concerne tout verre qui contient les composants de base suivants (exprimés en pourcentages en poids total de verre) :

| | |
|---|---|
| SiO₂ | 60 à 75 % |
| Na₂O | 10 à 20 % |
| CaO | 0 à 16 % |
| K₂O | 0 à 10 % |
| MgO | 0 à 10 % |
| Al₂O₃ | 0 à 5 % |
| BaO | 0 à 2% |
| BaO + CaO + MgO | 10 à 20 % |
| K₂O + Na₂O | 10 à 20 %. |

Elle désigne aussi tout verre comprenant les composants de base précédents qui peut comprendre en outre un ou plusieurs additifs.

Selon une forme de réalisation de l'article, le verre de l'article est constitué d'une feuille de verre plat. Selon cette forme de réalisation, le verre plat peut, par exemple, être un verre flotté, un verre étiré ou un verre imprimé.

Toujours selon cette forme de réalisation, la feuille de verre plat peut faire l'objet du traitement selon l'invention sur une seule face ou, alternativement, sur ses deux faces. Dans le cas d'un traitement sur une seule face d'une feuille de verre imprimé, le traitement selon l'invention est avantageusement réalisé sur la face non imprimée de la feuille si celle-ci est imprimée sur une seule face.

De préférence, le verre de l'article est constitué d'une feuille de verre plat de type sodo-calcique.

Généralement, on préfère que l'article en verre n'ait pas fait l'objet d'un recouvrement par une couche quelconque avant le traitement de la présente invention, tout au moins sur la surface à traiter. L'article en verre selon l'invention peut faire l'objet d'un recouvrement par une couche quelconque après le traitement de la présente invention, de préférence sur la surface opposée à celle qui a été traitée selon l'invention.

L'article en verre possède des propriétés antimicrobiennes. On entend désigner par là un article en verre qui permet de neutraliser les microorganismes entrant en contact avec lui. Par « microorganismes », on entend des êtres vivants monocellulaires de taille microscopique tels que les bactéries, levures, micro-algues, champignons ou virus. Par « neutraliser », on entend au minimum le maintien de la quantité de départ des microorganismes (effet statique); l'invention exclut une augmentation de cette quantité. Le développement et la prolifération des microorganismes sont ainsi empêchés et, dans la quasi-totalité des cas, la surface de recouvrement des microorganismes diminue, même en cas de maintien de leur quantité. La neutralisation des microorganismes peut aller, selon l'invention, jusqu'à leur destruction partielle et même totale (effet microbicide).

En particulier, l'article en verre présente un effet antibactérien (bactéricide ou bactériostatique) sur un grand nombre de bactéries, que ce soit des bactéries gram positive ou gram négative, en particulier sur l'une au moins des bactéries suivantes : *Escherichia coli, Staphylococcus aureus, Pseudomonas aeruginosa, Enterococcus hirae.* Avantageusement, l'article en verre selon l'invention présente également un effet antifongique (fongicide ou fongiostatique); en particulier sur *Candida albicans,* et/ou *Aspergillus niger.*

L'article en verre comprend au moins un agent antimicrobien diffusé sous ladite surface. Selon l'invention, l'agent antimicrobien est choisi parmi les éléments argent (Ag), cuivre (Cu), étain (Sn) et zinc (Zn).

Selon l'invention, l'agent antimicrobien est présent soit sous forme de particules très petites de métal ou d'oxyde, soit dissout dans la matrice du verre.

De manière préférée, l'agent antimicrobien selon l'invention est l'élément argent (Ag). Dans ce cas, avantageusement, l'argent est diffusé sous la surface, de telle sorte que le rapport d'intensités I(CsAg)/I(CsSi), mesuré en surface selon la méthode SIMS dynamique, soit supérieur à 0.002, et de préférence supérieur ou égal à 0.010. De telles valeurs de rapport d'intensités I(CsAg)/I(CsSi) permettent d'obtenir un effet antimicrobien suffisant.

La mesure du rapport d'intensités I(CsAg)/I(CsSi) a été effectuée sur un appareillage de type Cameca ims-4f. I(CsAg) est l'intensité du pic obtenu pour les ions CsAg+ et I(CsSi) est l'intensité du pic obtenu pour les ions CsSi+, après bombardement de la surface du substrat par un faisceau d'ions Cs+ qui décape progressivement la surface de l'échantillon. L'énergie du faisceau d'ions Cs+ atteignant le substrat est de 5,5 keV. L'angle d'incidence du faisceau est de 42° par rapport à la normale au substrat. Les valeurs, en surface, signifie que les valeurs sont prises pour une profondeur la plus petite possible, dès que la valeur obtenue est significative. Suivant la vitesse d'érosion utilisée, les premières valeurs significatives peuvent correspondre à des profondeurs maximum d'environ 1 à 5 nm. Dans le cas présent, les valeurs en surface correspondent à une profondeur de 2 nm maximum. Pour que les valeurs obtenues soient significatives, il faut notamment que le rapport des intensités des isotopes I(Ag107)/I(Ag109) soit proche de la valeur théorique (1.0722), en particulier compris entre 1.01 et 1.13.

Selon un mode de réalisation particulier de l'invention, la concentration en agent antimicrobien se répartit dans la profondeur du verre selon un profil de diffusion classique, c'est-à-dire un profil qui décroît continûment à partir de la surface du verre et tend vers zéro à une profondeur donnée.

Selon un autre mode de réalisation particulier de l'invention, la concentration en agent antimicrobien se répartit dans la profondeur du verre selon un profil qui présente un minimum. Préférentiellement, le minimum se situe à une distance de la surface comprise entre 10 et 4000 nm.

Selon l'invention, les nanoparticules sont
(i) partiellement incorporées dans la masse du verre; et/ou
(ii) totalement incorporées dans la masse du verre.

Par nanoparticule partiellement incorporée dans la masse du verre, on entend une nanoparticule qui se trouve à la fois dans la masse du verre et en dehors de la masse du verre. En d'autres mots, la nanoparticule n'est pas complètement entourée par le verre.

Par nanoparticule totalement incorporée dans la masse du verre, on entend une nanoparticule qui se trouve sous la surface du verre de l'article, à distance proche de celle-ci.

Les nanoparticules de l'invention sont constituées d'au moins un composé inorganique. Dans l'alternative où elles comprennent, en leur sein, plusieurs composés inorganiques, la composition peut être homogène ou hétérogène.

Selon l'invention, le composé inorganique peut être totalement étranger à la composition de la masse du verre de l'article. Il peut aussi, en variante, être déjà présent dans la composition de la masse du verre de l'article.

Tout composé inorganique qui diminue ou ralentit la diffusion de l'agent antimicrobien sous l'effet de la température peut convenir. On préfère cependant, d'une manière générale, que dans l'article en verre selon l'invention, le composé inorganique constituant les nanoparticules soit choisi parmi les oxydes, les nitrures, les carbures et les associations d'au moins deux oxydes et/ou nitrures et/ou carbures.

De manière plus préférée, le composé inorganique est sélectionné parmi les composés de magnésium, de calcium, de strontium, de baryum, de scandium, d'yttrium, de lanthane, de titane, de zirconium, de vanadium, de niobium, de tantale, d'aluminium, de gallium, d'indium, de silicium, de germanium, et les associations d'au moins deux des composés précités. Avantageusement, les inventeurs ont mis en évidence que la résistance des propriétés antimicrobiennes à la température est particulièrement bonne lorsque le composé inorganique est un composé d'aluminium et en particulier, un oxyde d'aluminium.

Selon un mode de réalisation préféré de l'invention, les nanoparticules sont au moins partiellement cristallisées, c'est-à-dire qu'elles comprennent au moins une proportion de 5 % de leur poids constituée par des cristaux. Les cristaux peuvent appartenir à plusieurs systèmes de cristallisation différents. En variante, ils peuvent aussi être tous du même système de cristallisation. De préférence, au moins 50 % du poids des nanoparticules est sous une forme cristallisée. De manière tout particulièrement préférée, la totalité des nanoparticules est sous la forme cristallisée.

Selon un autre mode de réalisation de l'invention, la forme des nanoparticules est quasi sphérique. Par quasi sphérique, on désigne une forme tridimensionnelle dont le volume se rapproche de celui d'une sphère dont le diamètre serait égal à la plus grande dimension d'un objet ayant cette forme quasi sphérique.

Les nanoparticules de l'invention ont des dimensions qui ne sont pas inférieures à 2 nm et, de préférence, qui ne sont pas inférieures à 10 nm. De plus, les nanoparticules ont des dimensions qui ne sont pas supérieures à 1000 nm et de préférence, qui ne sont pas supérieures à 500 nm et, de manière plus préférée, qui ne sont pas supérieures à 300 nm Par taille, on entend désigner la plus grande dimension des nanoparticules.

L'article en verre peut être traité thermiquement, en particulier il peut être traité thermiquement en vue d'une trempe. L'invention couvre aussi bien l'article de verre non traité thermiquement, que l'article de verre traité thermiquement. Selon un mode de réalisation particulier de l'invention, l'article de verre présente à la fois des propriétés antimicrobiennes et des propriétés de verre trempé. Par verre à propriété de verre trempé, on entend un verre qui présente une résistance mécanique accrue par rapport à un verre classique non trempé de même épaisseur et de même composition.

L'article en verre obtenu par le procédé selon l'invention peut être obtenu selon un procédé comprenant deux étapes principales :
(a) l'inclusion partielle et/ou totale de nanoparticules constituées d'au moins un composé inorganique dans la masse du verre proche de ladite surface ; et
(b) le dépôt et la diffusion de l'agent antimicrobien sous la surface du verre, dans lequel l'inclusion partielle et/ou totale de nanoparticules est réalisée par la pulvérisation assistée par flamme.

Différentes méthodes connues en soi peuvent convenir pour inclure partiellement et/ou totalement des nanoparticules dans la masse du verre. En particulier, un exemple de procédé comprend (a) la production de nanoparticules, (b) le dépôt des nanoparticules sur la surface de l'article, et (c) l'apport d'énergie aux nanoparticules et/ou à ladite surface de telle manière que les nanoparticules diffusent/s'incorporent dans le verre. La formation et le dépôt de nanoparticules sur la surface du verre peuvent être réalisés en une seule étape par des méthodes connues telles que le dépôt chimique en phase vapeur (ou CVD), le dépôt par voie humide tel que par exemple le dépôt sol-gel, ou la pulvérisation assistée par flamme (ou flame spraying) au départ d'un précurseur liquide, gazeux ou solide.

Dans la pulvérisation assistée par flamme, divulguée notamment dans la demande FI954370, les nanoparticules sont générées par atomisation d'une solution d'au moins un précurseur chimique en un aérosol transporté dans une flamme où une combustion se produit pour former des nanoparticules solides. Ces nanoparticules peuvent ensuite être déposées directement sur une surface placée à proximité de l'extrémité de la flamme.

En variante, la formation et le dépôt de nanoparticules sur la surface de l'article en verre peuvent être réalisés consécutivement en deux étapes. Dans ce cas, les nanoparticules sont générées au préalable sous forme solide ou sous forme de suspension dans un liquide par voie vapeur, par voie humide (sol-gel, précipitation, synthèse hydrothermale,...) ou par voie sèche (broyage mécanique, synthèse mécanochimique,...). Un exemple de méthode permettant de générer au préalable des nanoparticules sous forme solide est la méthode connue sous le nom de condensation chimique en phase vapeur assistée par combustion (ou CCVC). Cette méthode consiste à convertir dans une flamme une solution de précurseur en phase vapeur qui subit une réaction de combustion pour fournir des nanoparticules qui sont finalement collectées.

Ensuite, les nanoparticules générées au préalable peuvent être transférées sur la surface du verre par différentes méthodes connues.

L'énergie nécessaire à la diffusion/l'incorporation des nanoparticules dans la masse du verre peut, par exemple, être apportée en chauffant le verre ou sa surface à une température adaptée. L'énergie nécessaire à la diffusion/l'incorporation des nanoparticules dans la masse du verre peut être apportée au moment du dépôt des nanoparticules ou ultérieurement. La pulvérisation assistée par flamme est particulièrement avantageuse dans ce cas car l'énergie nécessaire à la diffusion/l'incorporation des nanoparticules dans la masse du verre est apportée au moment du dépôt des nanoparticules par la chaleur de la flamme elle-même.

Selon un mode de réalisation particulier de l'invention, le procédé pour obtenir un article en verre est caractérisé en ce que l'inclusion partielle et/ou totale de nanoparticules comprend le chauffage du substrat verrier afin d'apporter l'énergie nécessaire à la diffusion/l'incorporation des nanoparticules dans la masse du substrat verrier.

Selon un mode de réalisation particulier de l'invention, le procédé pour obtenir un article en verre est caractérisé en ce que l'inclusion partielle et/ou totale de nanoparticules est réalisée par la pulvérisation assistée par flamme afin d'apporter l'énergie nécessaire à la diffusion/l'incorporation des nanoparticules au moment du dépôt des nanoparticules.

Les demandes internationales W02008/132173 A1 et WO2010/046336 A1 décrivent l'incorporation de nanoparticules d'oxyde d'aluminium dans du verre selon un procédé en une seule étape via une technique de pulvérisation assistée par flamme au départ d'un sel d'aluminium. Avantageusement, les nanoparticules de l'article en verre selon l'invention sont obtenues selon un tel procédé.

Différentes méthodes connues en soi peuvent convenir pour obtenir un agent microbien diffusé sous la surface d'un article de verre. En particulier, il est possible de déposer l'agent antimicrobien sous forme d'une couche par spray pyrolytique ou par pulvérisation cathodique sous vide, suivi d'une légère diffusion contrôlée de l'agent antimicrobien sous la surface, par exemple 30 minutes à une température de 250°C. Les deux étapes de dépôt de l'agent antimicrobien et de diffusion de celui-ci sous la surface peuvent également être quasiment simultanées si l'article en verre ou sa surface est préalablement chauffé.

Avantageusement, l'article de verre selon l'invention peut être obtenu en une seule étape principale, via une technique de pulvérisation assistée par flamme au départ d'une solution d'un sel du composé inorganique et d'un sel de l'agent antimicrobien.

Selon un mode de réalisation particulier de l'invention, le procédé pour obtenir un article en verre est caractérisé en ce que l'inclusion partielle et/ou totale de nanoparticules comprend le dépôt d'au moins un sel du composé inorganique sur au moins une surface du substrat verrier.

Selon un mode de réalisation particulier de l'invention, le procédé pour obtenir un article en verre est caractérisé en ce que le dépôt d'au moins un sel du composé inorganique et le dépôt de l'agent antimicrobien sont réalisés au moins partiellement simultanément au départ d'une solution d'au moins un sel du composé inorganique et d'au moins un sel de l'agent antimicrobien.

Du fait de ses propriétés antimicrobiennes et du fait qu'il peut être trempé thermiquement sans altérer lesdites propriétés, l'article en verre selon l'invention a de nombreuses applications. A titre d'exemple, il peut être utilisé en tant que récipient pour denrées consommables ou comme élément de salle de bain, de cuisine ou de laboratoire (miroir, partition, sol, plan de travail, porte). Il peut également être utilisé comme élément d'appareils tel que des étagères de réfrigérateurs ou des portes de four. Il a également de nombreuses applications en milieu hospitalier.

Les exemples qui suivent illustrent l'invention, sans intention de limiter de quelque façon sa couverture

### Exemple 1 (comparatif)

Trois feuilles de verre flotté clair de type sodo-calcique d'une épaisseur de 4 mm et de dimensions 20 cm x 20 cm ont été lavées de manière consécutive à l'eau courante, à l'eau désionisée et à l'alcool isopropylique et finalement séchées. Elles ont ensuite chacune été recouvertes d'une mince couche d'argent par la méthode de dépôt sous vide, aussi appelée pulvérisation cathodique magnétron, d'une manière connue en soi, en utilisant une cible métallique d'argent dans une atmosphère d'argon. La quantité d'argent déposée est de 40 mg/m² de surface traitée. Pour faire diffuser l'argent sous la surface, les trois feuilles de verre ont alors subi un traitement thermique dans les conditions (durée et température) suivante :
- feuille 1 : 250°C pendant 30 minutes ;
- feuille 2 : 400°C pendant 30 minutes ;
- feuille 3 : 650°C pendant 30 minutes.

Les feuilles traitées ont finalement alors été nettoyées à l'acide (solution d'HNO₃ et Fe(NO₃)₃) pour éliminer l'excès d'argent resté en surface et n'ayant donc pas diffusé lors du traitement thermique.

Les feuilles de verre traitées comme décrit ci-dessus ont été analysées par spectrométrie de masse des ions secondaires.

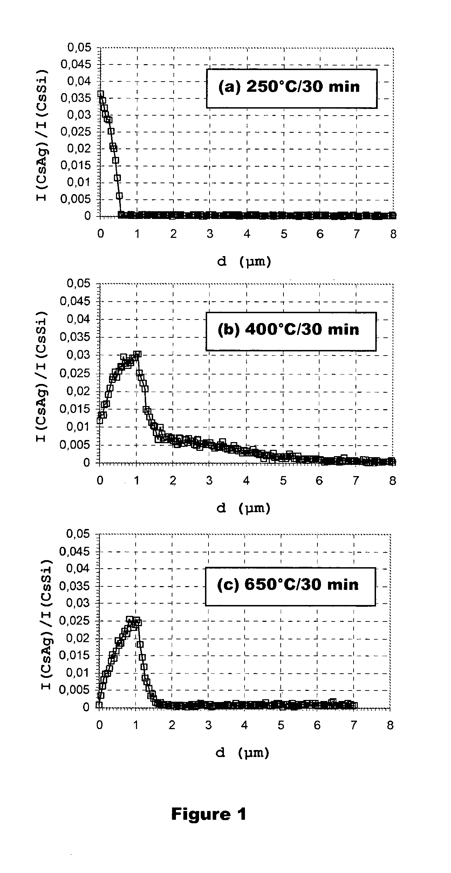

La Figure 1 montre la quantité d'argent (rapport d'intensités I(CsAg)/I(CsSi)) diffusé sous la surface du verre en fonction de la profondeur (d) dans le substrat pour chacun des traitements thermiques (a), (b) et (c). De plus, la quantité d'argent à la surface (d = 0) a été estimée sur base du rapport I(CsAg)/I(CsSi) obtenu par SIMS dynamique. I(CsAg) est l'intensité du pic obtenu pour les ions CsAg⁺ et I(CsSi) est l'intensité du pic obtenu pour les ions CsSi⁺ après bombardement de la surface du substrat par un faisceau d'ions Cs⁺ avec un appareillage de type « cameca ims-4f» (faisceau de 5.5 keV et angle d'incidence de 42° par rapport à la normale au substrat). Ces analyses illustrent l'effet drastique de la température, pour une même durée de traitement, sur la quantité d'argent présent à la surface du verre. Les rapports d'intensités I(CsAg)/I(CsSi) en surface (d = 0) déterminés sont en effet les suivants :
- feuille 1 : 0.037
- feuille 2 : 0.011
- feuille 3 : 0

Un traitement à une température de 400°C ou 650°C entraîne une migration très importante de l'argent au départ de la surface vers la masse du verre, avec un maximum centré vers 1 micron. L'argent situé à cette distance de la surface n'est plus disponible pour jouer son rôle antimicrobien et est donc perdu. L'effet du traitement à 650°C est tellement négatif que la quantité d'argent présent à la surface du verre est pratiquement nulle.

### Exemple 2 (comparatif)

Une feuille de verre flotté clair de type sodo-calcique de 4 mm d'épaisseur et de dimensions 20 cm x 20 cm a été lavée de manière consécutive à l'eau courante, à l'eau désionisée et à l'alcool isopropylique et finalement séchée.

De l'hydrogène et de l'oxygène ont été introduits dans un brûleur ponctuel afin de générer une flamme à la sortie dudit brûleur. Une solution contenant du nitrate d'argent, AgNO₃ dissout dans l'eau (rapport de dilution en poids aluminium/eau = 1/2419, flux de la solution = 10 ml/min) a été introduite dans la flamme. La feuille de verre lavée a été chauffée au préalable dans un four à une température de 600°C et une de ses surfaces a été placée sous le brûleur à proximité de l'extrémité de la flamme, à une distance de 130 mm. Afin de couvrir toute la surface de la feuille de verre, le brûleur ponctuel est mobile dans les deux directions de l'espace comprise dans le plan de ladite feuille. La tête du brûleur s'est déplacée de manière continue dans une des deux directions à une vitesse fixée à 3 mètres par minute et, dans l'autre direction, perpendiculaire à la première, avec des sauts de 2 centimètres. Après ce traitement, la feuille de verre a ensuite été refroidie de manière contrôlée.

La feuille de verre traitée comme décrit ci-dessus a été analysée par spectrométrie de masse des ions secondaires.

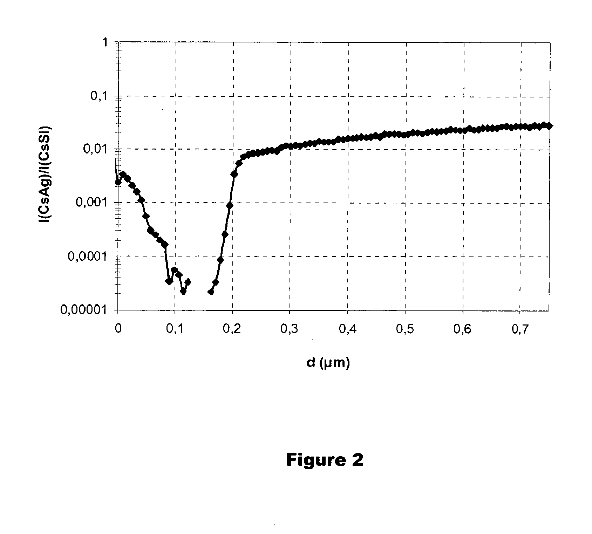

La Figure 2 représente la quantité d'argent diffusé (rapport d'intensités I(CsAg)/I(CsSi) en échelle logarithmique) en fonction de la profondeur (d) dans la feuille de verre au départ de la surface traitée. Elle illustre la diffusion de l'argent sous la surface du verre. La concentration en argent se répartit sur une profondeur supérieure à 1 micron selon un profil qui présente un minimum à une profondeur à partir de la surface d'environ 150 nm. De plus, le rapport d'intensités I(CsAg)/I(CsSi) en surface est de 0,002.

### Exemple 3 (conforme à l'invention)

Une feuille de verre flotté clair de type sodo-calcique d'une épaisseur de 4 mm et de dimensions 20 cm x 20 cm a été lavée de manière consécutive à l'eau courante, à l'eau désionisée et à l'alcool isopropylique et finalement séchée.

De l'hydrogène et de l'oxygène ont été introduits dans un brûleur linéaire afin de générer une flamme à la sortie dudit brûleur. Le brûleur utilisé avait une largeur de 20 cm et possédait 2 rampes d'atomisation pour l'introduction de la solution de précurseurs. La feuille de verre lavée a été chauffée au préalable dans un four à une température de 600°C et a ensuite défilé à cette température à une vitesse d'environ 8 m/min sous le brûleur placé au-dessus de la feuille de verre à une distance de 90 mm. La solution introduite dans la flamme à l'aide des gicleurs contenait du nitrate d'agent, AgNO3 dissous dans l'eau (rapport de dilution en poids argent/eau = 1/3500) et du nitrate d'aluminium nonahydraté, Al(NO₃)₃.9H₂O dissous dans le méthanol (rapport de dilution en poids aluminium/méthanol = 1/20). Le flux total de la solution était de 360 ml/min. Après ce traitement, la feuille de verre a ensuite été refroidie de manière contrôlée.

La feuille de verre traitée comme décrit ci-dessus a été analysée par microscopie électronique à balayage et à transmission, par spectrométrie de fluorescence X, par spectroscopie des photoélectrons X et par spectrométrie de masse des ions secondaires.

Les analyses réalisées ont montré que l'aluminium a été incorporé dans la masse du verre proche de la surface sous forme de nanoparticules d'oxyde d'aluminium, Al₂O₃. Les nanoparticules sont majoritairement cristallines et elles ont une taille qui varie de 10 à 100 nm.

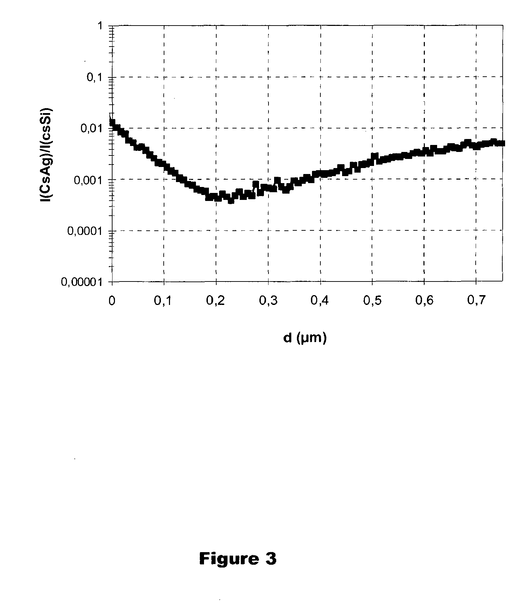

La Figure 3 représente le rapport d'intensités I(CsAg)/](CsSi) (échelle logarithmique) en fonction de la profondeur (d) dans la feuille de verre au départ de la surface traitée. Elle illustre la diffusion de l'argent sous la surface du verre. La concentration en argent se répartit dans la profondeur du verre selon un profil qui présente une valeur maximale à la surface, une décroissance progressive jusqu'à un minimum centré vers 200 nm, suivi d'une légère croissance se terminant par un palier à partir d'environ 0,8 micron. De plus, le rapport I(CsAg)/I(CsSi) en surface (valeur maximale du profil) est de 0,015 ce qui montre que, en partant d'un même procédé pour faire diffuser l'argent, la présence de nanoparticules permet d'obtenir une concentration en argent bien plus élevée en surface du verre, ce qui est en faveur de l'activité antimicrobienne.

### Exemple 4 (conforme à l'invention

Un article a été obtenu dans une installation destinée à fabriquer de manière continue du verre plat de type sodo-calcique. Cette installation comprend un four de fusion, un bain d'étain et une galerie de refroidissement. Le verre, à l'état fondu, a été coulé sous forme de ruban provenant du four de fusion sur le bain d'étain. Le ruban de verre avait une épaisseur moyenne de 8 mm. Il a ensuite défilé avec une vitesse constante d'environ 7,75 m/min et avec une température de 615°C vers un brûleur linéaire de 20 cm de large. Le brûleur a été alimenté en hydrogène et en oxygène afin de générer une flamme à la sortie dudit brûleur et il a été placé au-dessus de la feuille de verre, à une distance de 145 mm. Une solution contenant du nitrate d'argent, AgNO₃ dissous dans le méthanol (rapport de dilution en poids argent/méthanol = 1/3500) et de nitrate d'aluminium nonahydraté, Al(NO₃)₃.9H₂O dissous dans le méthanol (rapport de dilution en poids aluminium/méthanol = 1/20) a été introduite dans la flamme (flux total de la solution = 343 ml/min). La feuille de verre a finalement défilé vers la galerie de refroidissement où elle a été refroidie de manière contrôlée dans les conditions usuellement utilisées pour le verre plat flotté.

La feuille de verre traitée comme décrit ci-dessus a été analysée par les mêmes techniques que celles citées à l'exemple 3.

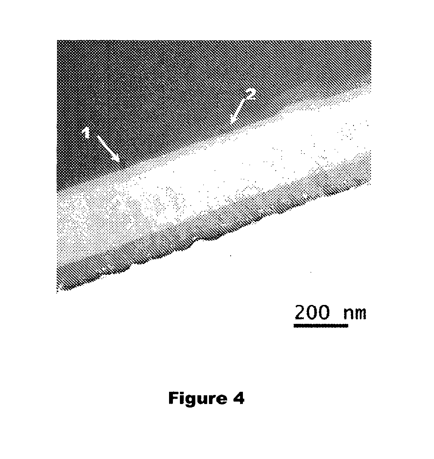

Les analyses réalisées ont montré que l'aluminium a été incorporé dans la masse du verre proche de la surface sous forme de nanoparticules d'oxyde d'aluminium, Al₂O₃. Les nanoparticules sont majoritairement cristallines et elles ont une taille qui varie d'environ 5 à 50 nm. La Figure 4 représente un cliché obtenu en microscopie électronique à transmission d'une section de la feuille de verre traitée. Il montre plusieurs nanoparticules d'oxyde d'aluminium incorporées dans la masse du verre, partiellement (1) ou totalement (2).

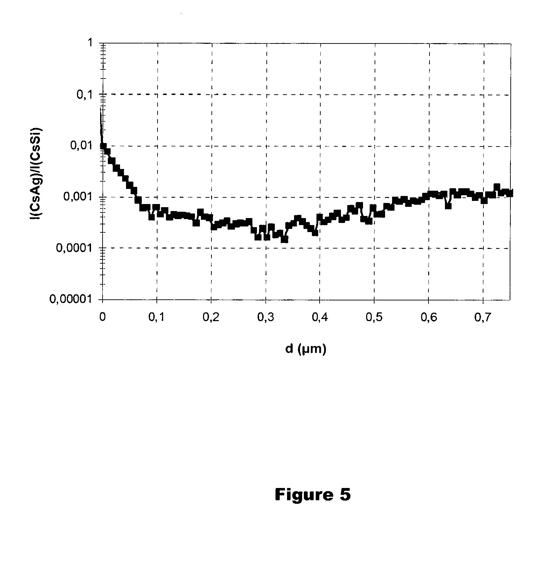

La Figure 5 représente le rapport d'intensités I(CsAg)/I(CsSi) (échelle logarithmique) en fonction de la profondeur (d) dans la feuille de verre au départ de la surface traitée. Elle illustre la diffusion de l'argent sous la surface du verre. La concentration en argent se répartit dans la profondeur du verre selon un profil qui présente une valeur maximale à la surface, une décroissance progressive jusqu'à un palier entre 150 et 400 nm, suivi d'une légère croissance se terminant par un autre palier à partir d'environ 0,6 micron. Le rapport I(CsAg)/I(CsSi) en surface (valeur maximale du profil) pour l'exemple 4 est de 0,010 ce qui montre de nouveau que la présence de nanoparticules permet d'obtenir une concentration en argent plus élevée en surface du verre.

### Exemple 5 (conforme à l'invention)

Un article a été obtenu dans une installation destinée à fabriquer de manière continue du verre plat imprimé de type sodo-calcique. Cette installation comprend un four de fusion, une lamineuse et une galerie de refroidissement. Le verre, à l'état fondu, a été coulé sous forme de ruban provenant du four de fusion dans la lamineuse où il est passé entre deux rouleaux superposés dont l'un est lisse et l'autre est gravé selon un motif d'impression. Ce motif d'impression a dès lors été reproduit sur une seule face du verre, celle tournée vers le bas du ruban horizontal. Le ruban de verre une fois passé au travers de la lamineuse avait une épaisseur moyenne de 4 mm (3,5-4,5 mm). Il a ensuite défilé avec une vitesse constante d'environ 3,7 m/min et avec une température de 710°C vers un brûleur linéaire de 2 m de large. Le brûleur a été alimenté en hydrogène et oxygène afin de générer une flamme à la sortie dudit brûleur et il a été placé au-dessus de la feuille de verre du côté non imprimé, à une distance de 120 mm. Une solution contenant du nitrate d'aluminium nonahydraté, Al(NO₃)₃.9H₂O dissous dans le méthanol (rapport de dilution en poids aluminium/méthanol = 1/60, flux = 1000 ml/min) a été introduite dans la flamme. La feuille de verre a ensuite défilé vers la galerie de refroidissement où elle a été refroidie de manière contrôlée dans les conditions usuellement utilisées pour le verre plat imprimé.

La feuille de verre a ensuite été recouverte d'une mince couche d'argent par la méthode de dépôt sous vide, aussi appelée pulvérisation cathodique magnétron, d'une manière connue en soi, en utilisant une cible métallique d'argent dans une atmosphère d'argon. La quantité d'argent déposée est de 100 mg/m² de surface traitée. Pour faire diffuser l'argent sous la surface, la feuille de verre a alors subi un traitement à 300°C pendant 15 minutes afin de faire diffuser l'argent sous la surface.

La feuille traitée a alors été nettoyée à l'acide (solution d'HNO₃ et Fₑ(NO₃)₃) pour éliminer l'excès d'argent resté en surface et n'ayant donc pas diffusé lors du traitement thermique.

Elle a ensuite été trempée de manière connue en soi, c'est-à-dire qu'elle a été chauffée à une température de 670°C pendant 3 minutes et a ensuite subi un refroidissement très rapide jusqu'à température ambiante.

La feuille de verre traitée comme décrit ci-dessus a été analysée par les mêmes techniques que celles citées à l'exemple 3.

Les analyses réalisées ont montré que l'aluminium a été incorporé sous forme de particules d'oxyde d'aluminium partiellement et totalement incorporées dans la masse du verre. Les particules ont une forme quasi sphérique et elles ont une taille qui varie de 170 à 850 nm. Les particules sont majoritairement cristallines.

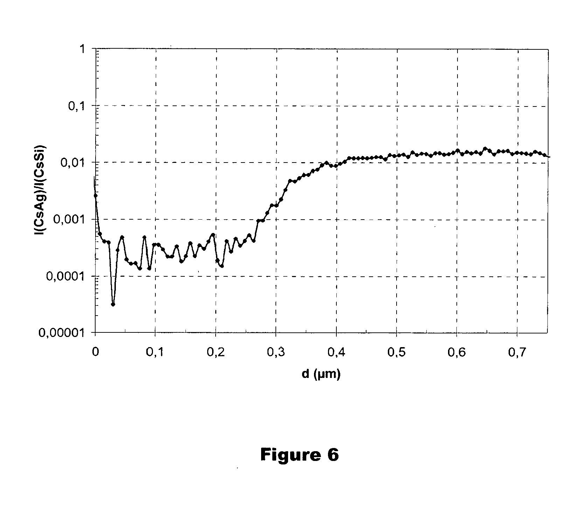

La Figure 6 représente le rapport d'intensités I(CsAg)/I(CsSi) (échelle logarithmique) en fonction de la profondeur (d) dans la feuille de verre au départ de la surface traitée. Elle illustre la diffusion de l'argent sous la surface du verre. Le rapport I(CsAg)/I(CsSi) en surface (valeur maximale du profil) est de 0,0026 ce qui montre que la présence de nanoparticules permet également de maintenir une certaine concentration en argent à la surface même après la trempe (comparé à l'échantillon de l'exemple 1 sans nanoparticule pour lequel la concentration en argent à la surface après un traitement thermique semblable est nulle).

## Revendications

1. Procédé pour obtenir un article en verre, ledit procédé comprenant
(i) l'inclusion partielle et/ou totale de nanoparticules dans la masse d'un substrat verrier proche d'au moins une surface du substrat verrier, les nanoparticules étant constituées d'au moins un composé inorganique;
(ii) le dépôt d'au moins un agent antimicrobien sur ladite surface du substrat verrier;
et
(iii) la diffusion de l'agent antimicrobien sous ladite surface du substrat verrier ;
dans lequel l'inclusion partielle et/ou totale de nanoparticules est réalisée par la pulvérisation assistée par flamme afin d'apporter l'énergie nécessaire à la diffusion/l'incorporation des nanoparticules au moment du dépôt des nanoparticules.

2. Procédé selon l'une quelconque des revendications précédentes, **caractérisé en ce que** le dépôt de l'agent antimicrobien comprend le dépôt d'un élément qui est choisi parmi les éléments argent (Ag), cuivre (Cu), étain (Sn) et zinc (Zn).

3. Procédé selon la revendication précédente, **caractérisé en ce que** le dépôt de l'agent antimicrobien comprend le dépôt de l'élément argent (Ag).

4. Procédé selon l'une quelconque des revendications précédentes, **caractérisé en ce que** le composé inorganique est sélectionné parmi les oxydes, les nitrures, les carbures et les associations d'au moins deux oxydes et/ou nitrures et/ou carbures.

5. Procédé selon la revendication précédente, **caractérisé en ce que** le composé inorganique est sélectionné parmi les composés de magnésium, de calcium, de strontium, de baryum, de scandium, d'yttrium, de lanthane, de titane, de zirconium, de vanadium, de niobium, de tantale, d'aluminium, de gallium, d'indium, de silicium, de germanium, et les associations d'au moins deux des composés précités.

6. Procédé selon la revendication précédente, **caractérisé en ce que** le composé inorganique est un composé d'aluminium.

7. Procédé selon la revendication précédente, **caractérisé en ce que** le composé inorganique est un oxyde d'aluminium.

8. Procédé selon l'une quelconque des revendications précédentes, **caractérisé en ce que** le substrat verrier est constitué d'une feuille de verre plat.

9. Procédé selon la revendication précédente, **caractérisé en ce que** le substrat verrier est constitué d'une feuille de verre plat de type sodo-calcique.

## Patentansprüche

1. Verfahren zum Bereitstellen eines Glasproduktes, wobei das Verfahren umfasst,
(i) den teilweisen oder vollständigen Einschluss von Nanopartikeln in die Masse eines Glassubstrats nahe mindestens einer Fläche des Glassubstrats, wobei die Nanopartikel aus mindestens einer anorganischen Verbindung bestehen;
(ii) das Abscheiden mindestens eines antimikrobiellen Mittels auf die Fläche des Glassubstrats;
und
(iii) die Diffusion des antimikrobiellen Mittels unter die Fläche des Glassubstrats;
wobei der teilweise oder vollständige Einschluss der Nanopartikel durch flammenunterstütztes Zerstäuben durchgeführt wird, um die notwendige Energie der Diffusion/dem Einfügen der Nanopartikel zum Zeitpunkt der Abscheidung der Nanopartikel zuzuführen

2. Verfahren nach einem beliebigen der vorhergehenden Ansprüche,
**dadurch gekennzeichnet, dass** die Abscheidung des antimikrobiellen Mittels die Abscheidung eines Elements umfasst, das aus den Elementen Silber (Ag), Kupfer (Cu), Zinn (Sn) und Zink (Zn) ausgewählt wird.

3. Verfahren nach dem vorhergehenden Anspruch, **dadurch gekennzeichnet, dass** die Abscheidung des antimikrobiellen Mittels die Abscheidung des Elements Silber (Ag) umfasst.

4. Verfahren nach einem beliebigen der vorhergehenden Ansprüche,
**dadurch gekennzeichnet, dass** die anorganische Verbindung aus den Oxiden, den Nitriden, den Karbiden und den Assoziationen von mindestens zwei Oxiden und/oder Nitriden und/oder Karbiden ausgewählt wird.

5. Verfahren nach dem vorhergehenden Anspruch, **dadurch gekennzeichnet, dass** die anorganische Verbindung aus den Verbindungen des Magnesiums, Kalziums, Strontiums, Bariums, Scandiums, Yttriums, Lanthans, Titans, Zirkoniums, Vanadiums, Niobs, Tantals, Aluminiums, Galliums, Indiums, Siliziums, Germaniums und aus den Assoziationen von mindestens zwei der vorher genannten Verbindungen ausgewählt wird.

6. Verfahren nach dem vorhergehenden Anspruch, **dadurch gekennzeichnet, dass** die anorganische Verbindung eine Aluminiumverbindung ist.

7. Verfahren nach dem vorhergehenden Anspruch, **dadurch gekennzeichnet, dass** die anorganische Verbindung ein Aluminiumoxid ist.

8. Verfahren nach einem beliebigen der vorhergehenden Ansprüche, **dadurch gekennzeichnet, dass** das Glassubstrat aus einer ebenen Glasscheibe besteht.

9. Verfahren nach dem vorhergehenden Anspruch, **dadurch gekennzeichnet, dass** das Glassubstrat aus einer ebenen Kalk-Natron-Glasscheibe besteht.

## Claims

1. Process for obtaining a glass article, said process comprising
(i) partial and/or total inclusion of nanoparticles into the mass of a glass substrate in proximity to at least one surface of the glass substrate, the nanoparticles consisting of at least one inorganic compound;
(ii) deposition of at least one antimicrobial agent onto said surface of the glass substrate;
and
(iii) diffusion of the antimicrobial agent below said surface of the glass substrate;
wherein the partial and/or total inclusion of nanoparticles is carried out by flame spraying in order to provide the energy required for diffusion/incorporation of the nanoparticles at the time of deposition of the nanoparticles.

2. Process according to any one of the preceding claims, **characterized in that** the deposition of the antimicrobial agent comprises deposition of an element selected from the elements of silver (Ag), copper (Cu), tin (Sn) and zinc (Zn).

3. Process according to the preceding claim, **characterized in that** the deposition of the antimicrobial agent comprises deposition of the element silver (Ag).

4. Process according to any one of the preceding claims, **characterized in that** the inorganic compound is selected from oxides, nitrides, carbides and combinations of at least two oxides and/or nitrides and/or carbides.

5. Process according to the preceding claim, **characterized in that** the inorganic compound is selected from the compounds of magnesium, calcium, strontium, barium, scandium, yttrium, lanthanum, titanium, zirconium, vanadium, niobium, tantalum, aluminum, gallium, indium, silicon, germanium, and combinations of at least two of the above-mentioned compounds.

6. Process according to the preceding claim, **characterized in that** the inorganic compound is an aluminum compound.

7. Process according to the preceding claim, **characterized in that** the inorganic compound is aluminum oxide.

8. Process according to any one of the preceding claims, **characterized in that** the glass substrate consists of flat glass.

9. Process according to the preceding claim, **characterized in that** the glass substrate consists of soda lime flat glass.
